# EUROPÄISCHE PATENTSCHRIFT

(11) **EP 1 642 074 B1**
(45) Veröffentlichungstag und Bekanntmachung des Hinweises auf die Patenterteilung: **08.12.2010**
(21) Anmeldenummer: 04737363.4
(22) Anmeldetag: 01.07.2004
(51) Int. Cl.: F27D 3/00, F27D 3/10, B65G 47/72, B01J 8/00

(54) **VERFAHREN ZUM CHARGIEREN VON SCHÜTTFÄHIGEM MATERIAL UND VORRICHTUNG ZUR DURCHFÜHRUNG DES VERFAHRENS**
METHOD FOR LOADING POURABLE MATERIAL AND DEVICE FOR CARRYING OUT SAID METHOD
PROCEDE POUR CHARGER UNE MATIERE APTE AU DEVERSEMENT ET DISPOSITIF POUR METTRE EN OEUVRE LE PROCEDE

(30) Priorität: 04.07.2003 AT 10282003
(43) Veröffentlichungstag der Anmeldung: 05.04.2006
(73) Patentinhaber: Siemens VAI Metals Technologies GmbH, 4031 Linz (AT)
(72) Erfinder: EL-RAYES, Mohamed, Tarek, A-4490 St. Florian (AT); PUM, Reinhard, A-4050 Traun (AT); REDL, Reinhard, A-4020 Linz (AT); WURM, Johann, A-4283 Bad Zell (AT); KASTNER, Rainer-Walter, A-4180 Zwettl (AT)
(74) Vertreter: Maier, Daniel Oliver
(86) Internationale Anmeldenummer: PCT/AT2004/000232
(87) Internationale Veröffentlichungsnummer: WO 2005/003666

(56) Entgegenhaltungen:
- DE-A- 1 907 224
- DE-A- 2 029 606
- FR-A- 2 674 227
- FR-A- 2 700 606
- GB-A- 2 085 561
- US-A- 4 887 773
- US-A- 5 595 482

## Beschreibung

Die Erfindung betrifft ein Verfahren zum Chargieren von schüttfähigem Material in einen Raum, wobei das Material mit Hilfe von Gravitationskräften über einen Kanal einer Öffnung des Raumes zugeleitet wird, sowie eine Vorrichtung zur Durchführung des Verfahrens.

Es sind zahlreiche Verfahren und Vorrichtungen zum Beschicken von Schachtöfen, wie zum Beispiel Hochöfen, Einschmelzvergasern, Konvertern oder sonstigen Reaktorbehältern, bekannt (DE 1 907 224 A, EP 0 436 718 B1, EP 0 010 627 B1, JP 2000178624, JP 59226108 sowie JP 6256829). Bei all diesen bekannten Verfahren und Vorrichtungen gelangt das zu chargierende schüttfähige Material über einen als Fallrohr ausgebildeten Kanal zu einer Öffnung des Schachtofens in dessen oberen Bereich und fällt sodann entweder über eine Umlenkvorrichtung (z.B. gemäß der DE 1 907 224 A) unter Ablenkung der Bewegungsrichtung oder ohne Umlenkvorrichtung (z.B. gemäß der EP 0 436 718 B1 oder der EP 0 010 627 B1) direkt in den Innenraum des Reaktors bzw. Schachtes.

Ist keine Umlenkvorrichtung vorhanden, so ist es praktisch nicht möglich, eine gleichmäßige Verteilung des zu chargierenden Materials im Innenraum zu erzielen, und schon gar nicht kann eine gewünschte Verteilung, zum Beispiel eine bevorzugte Chargierung im Zentrum des Innenraumes oder eine Chargierung bevorzugt im Randbereich, durchgeführt werden.

Um diesem Umstand abzuhelfen, ist es bereits bekannt, im Innenraum des Schachtofens Verteilelemente anzuordnen, die eine Umlenkung der Bewegungsrichtung des chargierten Materials zulassen, beispielsweise kann eine solche Verteileinrichtung schwenkbar oder auch verschiebbar im Innenraum angeordnet sein (vgl. DE 1 907 224 A, JP 2000178624 und JP 59226108). Diese bekannten Vorrichtungen weisen jedoch große Nachteile auf, zumal der Innenraum um die Anordnung dieser Verteilelemente größer bemessen werden muss, da diese Elemente einen gewissen Höhenbereich des Innenraums beanspruchen. Weiters sind Verteilelemente dieser Art den Belastungen des Innenraums, wie zum Beispiel der Atmosphäre des Innenraums und der Temperatur des Innenraums, ausgesetzt, sodass solche Verteilelemente einem großen Verschleiß unterliegen, zudem häufig gewartet werden müssen und weiters oftmals zu Betriebsstörungen Anlass geben. Ein weiterer Nachteil ist noch darin zu sehen, dass eine solche Anordnung von Verteilelementen eine besonders aufwendige Konstruktion derselben erfordert, um den hohen Belastungen im Innenraum eines Reaktors bzw. Schachtes standhalten zu können.

Versuche, mit einfachen Einbauten Abhilfe zu schaffen, wie zum Beispiel durch den Einbau von Ketten etc., haben sich in der Praxis nur bedingt bewährt.

Die Erfindung bezweckt die Vermeidung dieser Nachteile und Schwierigkeiten und stellt sich die Aufgabe, ein Verfahren der eingangs beschriebenen Art sowie eine Vorrichtung zur Durchführung des Verfahrens zu schaffen, welche in einfacher Art und Weise eine zuverlässige Chargierung des zu chargierenden Materials in genau gewünschter Verteilung im zu chargierenden Raum ermöglichen. Zudem soll die Vorrichtung betriebssicher und weniger kostenintensiv als bekannte Vorrichtungen sein. Auch soll eine Reparatur in einfacher Weise möglich sein.

Diese Aufgabe wird erfindungsgemäß bei einem Verfahren gemäss Anspruch 1 dadurch gelöst, dass das schüttfähige Material knapp vor Durchtritt durch die Öffnung, d.h. innerhalb des Kanals, Kräften ausgesetzt wird, die seine vom Kanal und von den Gravitationskräften verursachte Bewegungsrichtung ablenken, wobei die die Bewegungsrichtung ablenkenden Kräfte nach Richtung und/oder Größe einstellbar sind.

Ein zusätzlicher Vorteil der Erfindung ist darin zu sehen, dass bestehende Anlagen zur Durchführung des erfindungsgemäßen Verfahrens leicht umgebaut werden können, zumal Eingriffe in den eigentlichen Schacht, Einschmelzvergaser etc. nicht notwendig sind.

Die Anwendung des Verfahrens erfolgt beim Chargieren von Erz und/oder reduziertem Erz und/oder Kohle mit/ohne Schlackebildner (wie Kalkstein, Dolomit, Quartz, etc.) in einen Schachtofen, insbesondere einen Einschmelzvergaser einer Anlage zur Reduktion von Erz, insbesondere Eisenerz.

Eine Vorrichtung gemäss Anspruch 2 zur Durchführung des erfindungsgemäßen Verfahrens, bei der das Material über einen Kanal einer Öffnung des Raumes zuströmen gelassen wird, ist **dadurch gekennzeichnet, dass** ein zumindest teilweise in den Kanal ragendes bzw. in diesem angeordnetes und benachbart zur Öffnung vorgesehenes und den der Öffnung zugeleiteten Strom des Materials lenkendes Verteilelement vorgesehen ist..

Hierbei ist das Verteilelement schwenkbar angeordnet, wobei die Schwenkachse innerhalb des Kanals liegt.

Zur Erzielung einer möglichst effektiven Lenkung des Materials sind zweckmäßig die Schwenkachse und der im Kanal sich bildende Materialstrom nahe benachbart. Hierbei ist zu beachten, dass der Materialstrom im Kanal nicht gleichmäßig verteilt ist, sondern z.B. bei schrägen Kanälen sich im unteren Bereich desselben bildet.

Gemäß bevorzugten Ausführungsvarianten ist die Schwenkachse parallel zur von der Öffnung gebildeten Fläche angeordnet oder schließt die Schwenkachse mit der Fläche der Öffnung einen Winkel, vorzugsweise einen Winkel < 60°, ein, wobei sich das Verteilelement je nach Anforderung von der Schwenkachse nach unten oder nach oben oder nach zwei einander entgegengesetzten Richtungen erstreckt.

Eine weitere bevorzugte Variante ist **dadurch gekennzeichnet, dass** das Verteilelement um eine Achse drehbar ist; es besteht jedoch auch die Möglichkeit, das Verteilelement verschiebbar anzuordnen.

Bezüglich der Gestaltung des Verteilelementes gibt es verschiedene bevorzugte Varianten, deren Anwendung von verschiedenen Betriebsbedingungen, wie zum Beispiel von der Körnung des schüttfähigen Materials, von der Höhe des freien Falls, vom Durchmesser des Raumes etc. abhängt. So kann das Verteilelement als ebene Fläche ausgebildet sein, es kann auch kegelförmig, winkelförmig oder rinnenförmig ausgestaltet sein. Auch ist unter Umständen eine vorteilhafte Variante **dadurch gekennzeichnet, dass** das Verteilelement einen Teil einer glockenförmigen Fläche oder einer Pflugfläche bildet.

Falls erforderlich, ist das Verteilelement mit einer Innenkühlung ausgestattet.

Die Erfindung bezieht sich auch auf einen Schachtofen, insbesondere einen Einschmelzvergaser einer Anlage zur Reduktion von Erz, vorzugsweise Eisenerz.

Ein weiterer Vorteil des Anbringens des Verteilelementes in einem als Fallrohr ausgebildeten Kanal besteht darin, dass im Bedarfsfall ein Austausch des Verteilelementes leicht bewerkstelligt werden kann.
Üblicherweise sind die Fallrohre mit dem Chargiergefäß, d.h. Schachtofen verschraubt (angeflanscht) und somit leicht demontierbar, d.h. die Zugänglichkeit zu einem Verteilelement, das im Fallrohr angebracht ist, ist einfacher als zu jenem, das sich im Chargiergefäß befindet.

In diesem Fall kann ein gasdichter Flachschieber als Trennorgan zwischen Fallrohr und Chargiergefäß angebracht werden. Dies hat den weiteren Vorteil, dass das Verteilelement im laufenden Betrieb ausgebaut werden. D.h., dass das Austauschen des Verteilelements im Reparaturfall oder bei sonstigen Betriebserfordernissen jederzeit vorgenommen werden kann, und zwar ohne die Anlage abstellen zu müssen, was einen Produktionsausfall mit sich bringen würde.

Ein weiterer Vorteil besteht darin, dass ein Austreten von störenden bzw. giftigen Gasen und Stäuben in die Atmosphäre verhindert wird.

Als zusätzlicher Vorteil ist anzusehen, dass Energieverluste durch Druck- oder Wärmeverlust verhindert werden.

Bei bestehenden Anlagen/Konstruktionen, bei denen das Fallrohr mit dem Chargiergefäß bzw. Schachtofen nicht verschraubt sondern verschweißt ist, ist die Zugänglichkeit zum Verteilelement durch eine geringfügige Änderung möglich. Und zwar durch das Anbringen einer Montageöffnung, eines Putzdeckels, oder, bei einem größeren Verteilelement, durch ein sogeanntes Mannloch. Diese können mit relativ wenig Aufwand an ein bestehendes Fallrohr angeschweißt werden.

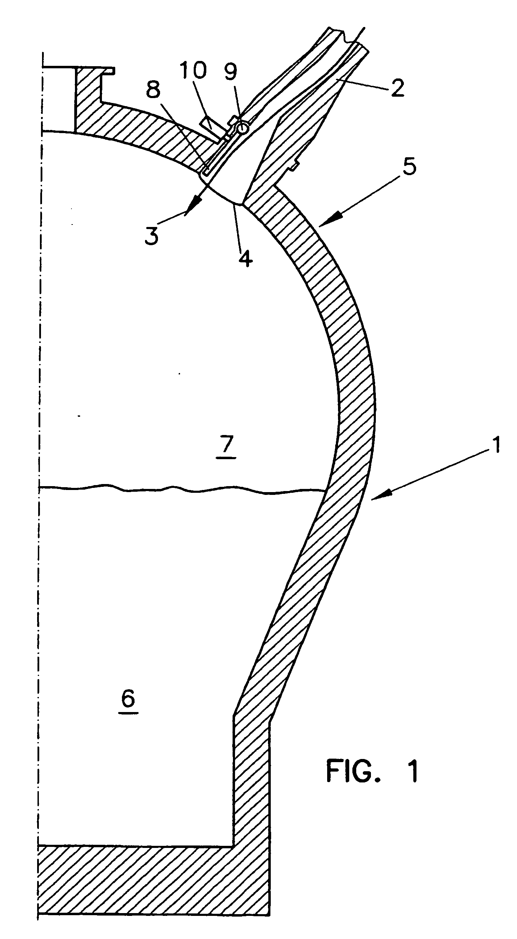

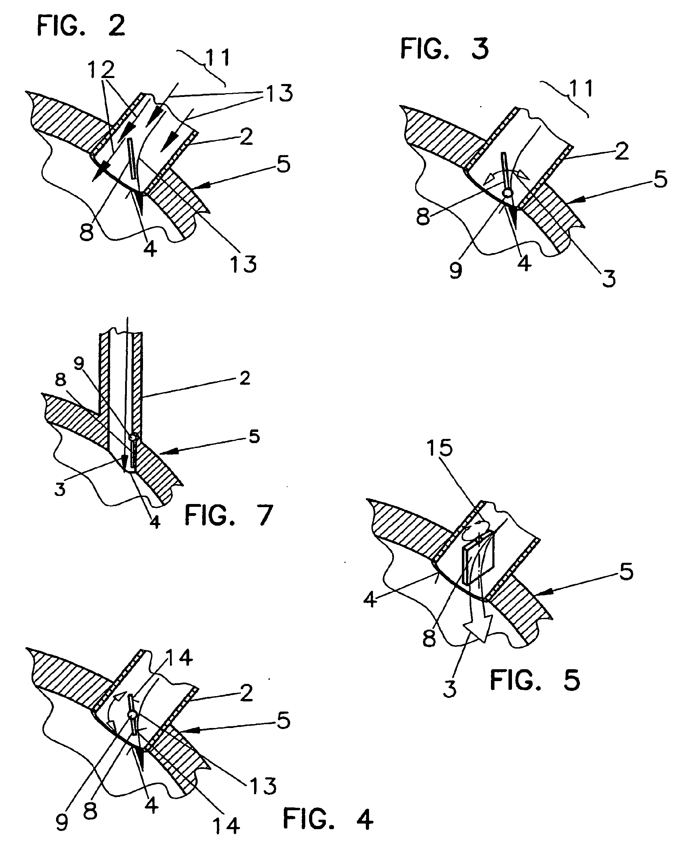

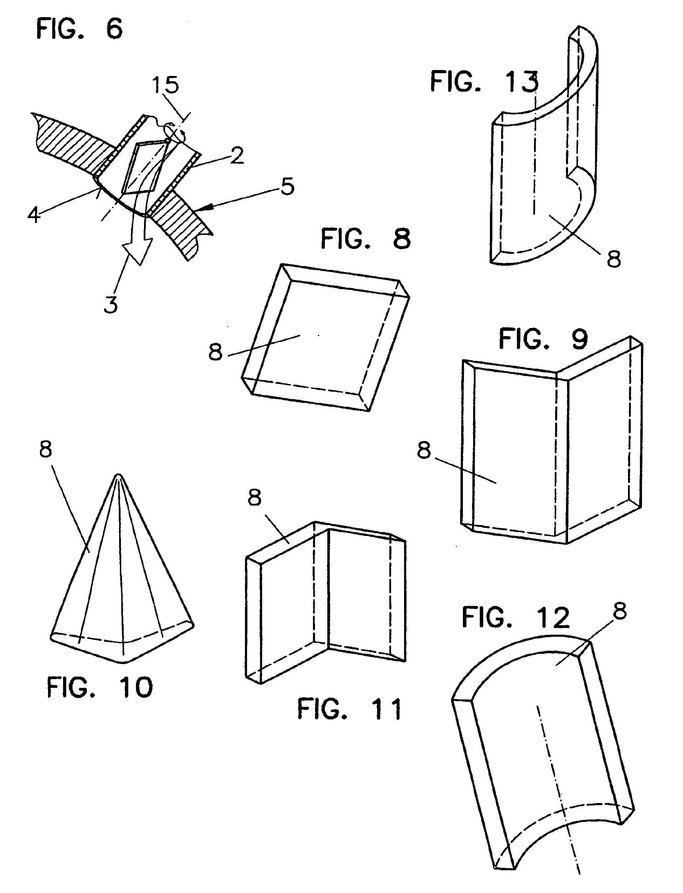

Die Erfindung ist nachfolgend anhand mehrerer in der Zeichnung dargestellter Ausführungsbeispiele näher erläutert, wobei Fig. 1 eine spezielle Anwendung bei einem Einschmelzvergaser einer Anlage zur Reduktion von Erz im Schnitt veranschaulicht. Die Fig. 2 bis 7 veranschaulichen unterschiedliche Varianten der erfindungsgemäßen Vorrichtung in zu Fig. 1 analoger Darstellung, jedoch im vergrößerten Maßstab. Die Fig. 8 bis 13 zeigen unterschiedliche Ausgestaltungsmöglichkeiten für ein Verteilelement, jeweils im Schrägriss.

In einem Einschmelzvergaser 1 wird über einen als Fallrohr 2 ausgebildeten, geneigt angeordneten Kanal reduziertes Material 3, d.h. Eisenschwamm, in schüttfähigem Zustand eingebracht. Das Fallrohr 2 mündet in eine Öffnung 4 im oberen Teil 5 des Einschmelzvergasers 1, welcher obere Teil 5 kuppelförmig ausgestaltet ist. Im Einschmelzvergaser erfolgt in einer von einem bewegten Festbett gebildeten Einschmelzvergasungszone 6 die Erzeugung eines Reduktionsgases aus Kohlenstoffträgern, wie Kohle, und sauerstoffhältigem Gas, das über eine nicht näher dargestellte Gasableitung einem nicht näher dargestellten Festbett zur Reduktion von Eisenerz zugeführt wird, wie dies beispielsweise in der AT 403.930 B beschrieben ist.

Um den Eisenschwamm 3 möglichst gleichmäßig über die Fläche des bewegten Festbettes einzubringen, ist in dem Fallrohr 2 nahe dessen Einmündung in den Innenraum 7 des Einschmelzvergasers 1 ein als Schwenkklappe 8 ausgebildetes Verteilelement 8 vorgesehen. Die Schwenkachse 9 des Verteilelements 8 ist hierbei in etwa parallel zur Fläche der Öffnung 4 des Einschmelzvergasers 1 zum Fallrohr 2 angeordnet, wobei die Schwenkklappe 8 eine derartige Länge aufweist, dass sie vorzugsweise nicht in den Innenraum 7 des Einschmelzvergasers 1 ragt.

Zur Betätigung der Schwenkklappe ist außenseitig am Einschmelzvergaser 1 ein Druckmittelzylinder 10 vorgesehen - die Verstellung könnte auch pneumatisch, elektrisch, oder manuell erfolgen. Für die Verwendung in einem Einschmelzvergaser 1 ist diese Schwenkklappe mit einer Innenkühlung ausgestattet, sodass ihre Lebensdauer trotz der heißen Gase im Inneren des Einschmelzvergasers 1 ausreichend ist. Die Einstellung der Schwenkklappe erfolgt jedoch bei Betriebserfordemis (z.B. Veränderung der Fahrweise; Einsatz anderer Materialien; Veränderung der Durchflussmenge; etc.).

Gemäß der in Fig. 2 dargestellten Ausführungsform ist das Verteilelement 8 im Inneren des Fallrohres 2 starr angeordnet und dient zur Aufteilung der von schüttfähigem Material 3 gebildeten Strähne 11 in einen Teil 12 näher zur Mitte des Einschmelzvergasers 1 und einen Teil 13, der eher randseitig abgelenkt wird.

Gemäß Fig. 3 ist das Verteilelement 8 ebenfalls als Schwenkklappe ausgebildet, die jedoch an ihrem unteren Ende schwenkbar angelenkt ist und mit der es möglich ist, je nach Stellung die Strähne 11 von schüttfähigem Material 3 zu lenken. Fig. 4 zeigt eine Schwenkklappe 8 mit zentral angeordneter Schwenkachse; diese ist ebenfalls parallel zur Fläche der Öffnung 4 ausgerichtet. Die Lenkflächen 14 der Schwenkklappe 8 erstrecken sich diametral von der Schwenkachse nach außen. Die Fig. 5 und 6 veranschaulichen drehbare Verteileiemente 8, wobei gemäß Fig. 5 die Drehachse 15 mit der Fläche der Öffnung 4 einen Winkel kleiner als 90° einschließt; gemäß Fig. 6 einen Winkel von etwa 90° einschließt.

Fig. 7 veranschaulicht einen dem Verteilelement, d.h. dessen Schwenkachse 9, eng benachbarten Strom an Material 3.

Die Fig. 8 bis 13 veranschaulichen verschiedene Ausführungformen des Verteilelements 8, und zwar eben (Fig. 8), winkelförmig (Fig. 9), als Teil einer Glocken form (Fig. 10), winkelförmig, jedoch entgegengesetzt gerichtet zu der in Fig. 9 dargestellten Ausführungsform in Fig. 11, sowie rinnenförmig nach den Fig. 12 und 13.

Die Erfindung beschränkt sich nicht auf das dargestellte Ausführungsbeispiel, sondern kann zum Chargieren beliebigen schüttfähigen Materials in einen Raum zur Anwendung gelangen, wobei selbst bei niedrigen Raumtemperaturen der Vorteil gegeben ist, dass der Raum, in den chargiert werden soll, von dem Verteilelement nicht tangiert wird, d.h. voll genutzt werden kann.

Eine weitere Möglichkeit bietet sich an, wenn starre Verteilorgane weder angetrieben noch verstellbar, jedoch austauschbar sind. D.h. je nach Betriebserfordernis können Verteilelemente, die gesteckt oder verschraubt sind (also leicht wechselbar sind), aus dem Fallrohr 2 entnommen und durch andere ersetzt werden.

Weiters ist eine Verteilung des Materials durch ein bewegliches Verteilelement, dessen Bewegung durch das fallende Material erzeugt wird, möglich.

## Patentansprüche

1. Verfahren zum Chargieren von Erz und/oder reduziertem Erz und/oder Kohle (3) in einen Schachtofen (1), insbesondere in einen Einschmelzvergaser, wobei das Erz und/oder reduzierte Erz und/oder Kohle (3) mit Hilfe von Gravitationskräften über einen Kanal (2) einer Öffnung (4) des Schachtofens zugeleitet wird, **dadurch gekennzeichnet, dass** innerhalb des Kanals (2) mittels eines Verteilelements (8) ein ungleichmäßiger Materialstrom gebildet und der Materialstrom vor dem Durchtritt durch die Öffnung (4) Kräften ausgesetzt wird, die seine vom Kanal und von den Gravitationskräften verursachte Bewegungsrichtung ablenken, wobei die die Bewegungsrichtung ablenkenden Kräfte durch das im Kanal angeordnete Verteilelement (8) nach Richtung und/oder Größe hinsichtlich einer möglichst gleichmäßigen Verteilung des Erzes und/oder reduzierten Erzes und/oder der Kohle (3) über die Fläche des Schachtofens (1) einstellbar sind.

2. Vorrichtung zur Durchführung des Verfahrens nach Anspruch 1, wobei das Erz und/oder das reduzierte Erz und/oder die Kohle (3) über einen Kanal (2) einer Öffnung (4) des Schachtofens (1), insbesondere eines Einschmelzvergasers, zuströmen gelassen wird,
**dadurch gekennzeichnet,**
**dass** ein in dem Kanal (2) und benachbart zur Öffnung (4) angeordnetes Verteilelement (8) vorgesehen ist,
wobei das Verteilelement (8)
i) eine ebene Fläche darstellt und derart starr oder schwenkbar oder drehbar angeordnet ist, dass eine Lenkung und eine Aufteilung des schüttfähigen Materialstromes (11) in zwei Teile (12,13) erfolgt, wobei ein Teil näher zur Mitte des Raumes (7) und ein Teil eher randseitig abgelenkt wird,
oder
ii) kegelförmig, winkelförmig, rinnenförmig, oder als Teil einer glockenförmigen Fläche oder einer Pflugfläche ausgebildet und schwenkbar angeordnet ist und sich die Schwenkachse (9) des Verteilerelementes (8) an der Wand des Kanals (2) befindet.

3. Vorrichtung nach Anspruch 2, **dadurch gekennzeichnet, dass** die Schwenkachse (9) parallel zur von der Öffnung (4) gebildeten Fläche angeordnet ist.

4. Vorrichtung nach Anspruch 2, **dadurch gekennzeichnet, dass** die Schwenkachse (9) mit der Fläche der Öffnung (4) einen Winkel einschließt, vorzugsweise einen Winkel < 60°.

5. Vorrichtung nach Anspruch 2, **dadurch gekennzeichnet, dass** das Verteilelement (8) sich von der Schwenkachse (9) nach unten erstreckt.

6. Vorrichtung nach Anspruch 2, **dadurch gekennzeichnet, dass** das Verteilelement (8) sich von der Schwenkachse (9) nach oben erstreckt.

7. Vorrichtung nach Anspruch 2, **dadurch gekennzeichnet, dass** sich das Verteilelement (8) in etwa mit der gleichen Erstreckung von der Schwenkachse (9) nach zwei einander entgegengesetzten Richtungen erstreckt.

8. Vorrichtung nach Anspruch 2, **dadurch gekennzeichnet, dass** das Verteilelement (8) um eine Achse (15) drehbar ist.

9. Vorrichtung nach Anspruch 2, **dadurch gekennzeichnet, dass** das Verteilelement (8) mit einer Innenkühlung ausgestattet ist.

10. Schachtofen (1), insbesondere Einschmelzvergaser, einer Anlage zur Reduktion von Erz, vorzugsweise Eisenerz, **gekennzeichnet durch** eine Vorrichtung nach einem oder mehreren der Anspruche 2 bis 9.

## Claims

1. Process for charging ore and/or reduced ore and/or coal (3) into a shaft furnace (1), in particular into a melt gasifier, wherein the ore and/or reduced ore and/or coal (3) is fed in with the aid of gravitational forces via a channel (2) to an opening (4) of the shaft furnace, **characterized in that** a non-uniform material flow is formed by means of a distribution element (8) within the channel (2) and the material flow, before it passes through the opening (4), is exposed to forces which deviate the direction of movement of said material flow which is determined by the channel and by the gravitational forces, wherein the forces which deviate the direction of movement can be adjusted by the distribution element (8) arranged in the channel, in terms of direction and/or magnitude, with regard to obtaining the most uniform distribution possible of the ore and/or reduced ore and/or of the coal (3) over the surface of the shaft furnace (1).

2. Device for carrying out the process according to Claim 1, wherein the ore and/or the reduced ore and/or the coal (3) is allowed to flow in via a channel (2) to an opening (4) of the shaft furnace (1), in particular of a melt gasifier,
**characterized**
**in that** a distribution element (8) which is arranged in the channel (2) and adjacent to the opening (4) is provided, wherein the distribution element (8)
i) represents a planar surface and is arranged in a rigid, pivotable or rotatable manner in such a way that the pourable material flow (11) is guided and split into two parts (12, 13), wherein one part is deviated closer to the centre of the space (7) and one part is deviated more to the edge,
or
ii) is formed in a conical, angular or groove-shaped manner or as part of a bell-shaped surface or of a plough-shaped surface and is arranged in a pivotable manner, and the pivot pin (9) of the distribution element (8) is located on the wall of the channel (2).

3. Device according to Claim 2, **characterized in that** the pivot pin (9) is arranged parallel to the surface formed by the opening (4).

4. Device according to Claim 2, **characterized in that** the pivot pin (9) includes an angle, preferably an angle < 60°, with the surface of the opening (4).

5. Device according to Claim 2, **characterized in that** the distribution element (8) extends downwards from the pivot pin (9).

6. Device according to Claim 2, **characterized in that** the distribution element (8) extends upwards from the pivot pin (9).

7. Device according to Claim 2, **characterized in that** the distribution element (8) extends approximately to the same extent from the pivot pin (9) in two opposite directions.

8. Device according to Claim 2, **characterized in that** the distribution element (8) is rotatable about an axis (15).

9. Device according to Claim 2, **characterized in that** the distribution element (8) is equipped with internal cooling means.

10. Shaft furnace (1), in particular melt gasifier, in an installation for reducing ore, preferably iron ore, **characterized by** a device according to one or more of Claims 2 to 9.

## Revendications

1. Procédé pour charger du minerai et/ou du minerai réduit et/ou du charbon (3) dans un four à cuve (1), notamment dans un gazéificateur à fusion, le minerai et/ou le minerai réduit et/ou le charbon (3) étant acheminé à l'aide de forces de gravité par le biais d'un canal (2) jusqu'à une ouverture (4) du four à cuve, **caractérisé en ce qu'**un flux de matériau non uniforme est formé à l'intérieur du canal (2) au moyen d'un élément de répartition (8) et le flux de matériau est exposé avant son passage par l'ouverture (4) à des forces qui dévient son sens de déplacement provoqué par les forces de gravité et par le canal, les forces déviant le sens de déplacement pouvant être ajustées par l'élément de répartition (8) disposé dans le canal, en termes de direction et/ou d'amplitude, dans le but d'obtenir une répartition aussi uniforme que possible du minerai et/ou du minerai réduit et/ou du charbon (3) sur la surface du four à cuve (1).

2. Dispositif pour mettre en oeuvre le procédé selon la revendication 1, dans lequel le minerai et/ou le minerai réduit et/ou le charbon (3) est autorisé à s'écouler par le biais d'un canal (2) jusqu'à une ouverture (4) du four à cuve (1), notamment d'un gazéificateur à fusion,
**caractérisé en ce**
**qu'**un élément de répartition (8) disposé dans le canal (2) et à proximité de l'ouverture (4) est prévu,
l'élément de répartition (8)
i) constituant une surface plane et étant disposé rigidement ou de manière pivotante ou rotative de telle sorte qu'il se produise une déviation et une division du flux de matériau pouvant être déversé (11) en deux parties (12, 13), une partie étant déviée plus près du centre de l'espace (7) et une partie étant plutôt déviée du côté du bord,
ou
ii) étant réalisé sous forme conique, angulaire, sous forme de rigole, ou sous forme de partie d'une surface en forme de cloche ou d'une surface en forme de charrue et étant disposé de manière pivotante et l'axe de pivotement (9) de l'élément de répartition (8) se trouvant sur la paroi du canal (2).

3. Dispositif selon la revendication 2, **caractérisé en ce que** l'axe de pivotement (9) est disposé parallèlement à la surface formée par l'ouverture (4).

4. Dispositif selon la revendication 2, **caractérisé en ce que** l'axe de pivotement (9) forme un angle avec la surface de l'ouverture (4), de préférence un angle < 60°.

5. Dispositif selon la revendication 2, **caractérisé en ce que** l'élément de répartition (8) s'étend vers le bas depuis l'axe de pivotement (9).

6. Dispositif selon la revendication 2, **caractérisé en ce que** l'élément de répartition (8) s'étend vers le haut depuis l'axe de pivotement (9).

7. Dispositif selon la revendication 2, **caractérisé en ce que** l'élément de répartition (8) s'étend approximativement avec la même étendue depuis l'axe de pivotement (9) dans deux directions opposées.

8. Dispositif selon la revendication 2, **caractérisé en ce que** l'élément de répartition (8) peut tourner autour d'un axe (15).

9. Dispositif selon la revendication 2, **caractérisé en ce que** l'élément de répartition (8) est muni d'un refroidissement interne.

10. Four à cuve (1), en particulier gazéificateur à fusion, d'une installation pour réduire le minerai, de préférence du minerai de fer, **caractérisé par** un dispositif selon l'une quelconque ou plusieurs des revendications 2 à 9.
